# FASCICULE DE BREVET EUROPEEN

(11) **EP 0 695 652 B1**
(45) Date de publication et mention de la délivrance du brevet: **30.12.1998**
(21) Numéro de dépôt: 95111226.7
(22) Date de dépôt: 18.07.1995
(51) Int. Cl.: B60C 23/04, B60C 23/20

(54) **Dispositif de surveillance de l'état des pneumatiques et de la température des freins d'un véhicule**
Vorrichtung zur Überwachung des Zustandes der Reifen und der Temperatur der Bremsen eines Fahrzeugs
Device for monitoring the state of pneumatic tires and the temperature of brake of a vehicle

(30) Priorité: 01.08.1994 FR 9409612
(43) Date de publication de la demande: 07.02.1996
(73) Titulaire: COMPAGNIE GENERALE DES ETABLISSEMENTS MICHELIN - MICHELIN & CIE, 63040 Clermont-Ferrand Cédex (FR)
(72) Inventeur: Francois, Jean-Pierre, F-63540 Romagnat (FR); Pellizzaro, Gilbert, F-63360 Gerzat (FR); Tromeur, Xavier, F-63460 Artonne (FR)
(74) Mandataire: Bauvir, Jacques

(56) Documents cités:
- DE-A- 2 522 556
- DE-A- 3 813 494
- DE-A- 3 941 509
- DE-A- 4 006 885
- FR-A- 2 342 860
- US-A- 2 575 922

## Description

La présente invention concerne un dispositif de surveillance de l'état des pneumatiques d'un véhicule ainsi que de leur environnement, notamment la température des organes de freinage.

De nombreux dispositifs de surveillance de l'état des pneumatiques d'un véhicule connus ne se contentent pas de déclencher une alarme lorsque la pression de l'un des pneumatiques est inférieure à un seuil donné, mais transmettent en permanence à une unité centrale reliée à un dispositif d'affichage disposé à proximité du conducteur la pression interne des pneumatiques ainsi que, pour certains d'entre eux, la température interne desdits pneumatiques. Un tel dispositif est décrit, par exemple, dans la demande WO89/05737.

Un usage intensif des freins ou un fonctionnement défectueux de ceux-ci entraînent un échauffement très important des organes de freinage en frottement (disque-étrier ou tambour-machoires). Cet échauffement peut conduire directement à des avaries graves de freinage. D'autre part, cet échauffement se transmet à l'ensemble des organes mécaniques disposés à proximité de ces organes de freinage et notamment aux pneumatiques par l'intermédiaire de leurs jantes. En conséquence, l'échauffement des organes de freinage perturbe les mesures de pression de gonflage et de température faites par des systèmes de surveillance de l'état de ces pneumatiques, mais aussi peut être la cause d'une fatigue thermique des parties des pneumatiques en contact avec les jantes.

Il est donc très important de pouvoir détecter un échauffement anormal de ces organes de freinage.

Le brevet US5050110 propose, pour corriger les erreurs dues aux échauffements des organes de freinage, de disposer à proximité de ces organes de freinage un capteur de température en complément de ceux qui mesurent la température interne des pneumatiques. Ce dispositif peut, bien entendu, détecter un échauffement anormal des organes de freinage. Mais, il impose d'augmenter le nombre de capteurs de mesure dans le véhicule, ce qui est coûteux.

L'invention a pour objet un dispositif de surveillance de l'état des pneumatiques d'un véhicule ainsi que de la température des freins qui ne nécessite pas d'augmenter le nombre des capteurs de mesure.

Dans ce qui suit, on entend par "moyeu" le moyeu tournant de la roue proprement dit, ainsi que tout autre organe tournant qui lui est rattaché, tel que couronne de comptage d'un système anti-blocage de roues (A.B.R.), parties tournantes de joint, etc. ; et on entend par "porte-moyeu" le porte-moyeu de la roue proprement dit, ainsi que tout organe non tournant qui lui est rattaché, tel que récupérateur d'huile, support de capteur A.B.R., etc.

De même, on entend par "roue" l'ensemble constitué par les deux roues accolées l'une à l'autre lors d'un montage de pneumatiques en jumelés ainsi qu'une roue usuelle lors d'un montage pneumatique en simple.

Enfin, on entend par "environnement des organes de freinage" l'ensemble des pièces mécaniques disposées à proximité des organes de freinage dont la température est significativement fonction de l'échauffement de ces organes de freinage à cause de transferts thermiques directs.

Le dispositif de surveillance, selon l'invention, comprend une unité centrale et pour chaque roue au moins un capteur de mesure relié par des premiers moyens de liaison électrique à une antenne tournante solidaire du moyeu de la roue ainsi qu'une antenne fixe solidaire du porte-moyeu de ladite roue et couplée à ladite antenne tournante, ladite antenne fixe étant reliée par des seconds moyens de liaison électrique à ladite unité centrale, lesdites antennes étant disposées dans l'environnement des organes de freinage de ladite roue et ladite unité centrale transmettant au conducteur les résultats des mesures et/ou une alarme si un état anormal des pneumatiques est détecté. Ce dispositif est caractérisé en ce qu'il comprend des moyens pour estimer la température desdits organes de freinage, lesdits moyens incluant l'une au moins desdites antennes sensible aux variations de température.

Ce dispositif a l'avantage de ne nécessiter l'installation d'aucun capteur de mesure de température supplémentaire pour effectuer une estimation de la température des organes de freinage.

Avantageusement, l'une au moins des antennes comporte un bobinage de fil conducteur dont la résistance électrique varie avec la température et on estime la température desdits organes de freinage par la mesure de la résistance électrique de ce bobinage.

Cette mesure peut être réalisée ainsi :
- on fait passer un courant électrique continu dans ledit bobinage;
- on mesure la différence de potentiel entre les deux extrémités dudit bobinage;
- on calcule la résistance électrique dudit bobinage;
- on en déduit la température moyenne dudit bobinage par référence à une première abaque d'étalonnage
- on estime la température des organes de freinage par référence à une seconde abaque d'étalonnage.

De préférence, la mesure de température est faite cycliquement entre deux phases de transfert par couplage inductif. Cela a l'avantage de ne pas introduire d'auto-échauffement dans le bobinage de l'antenne.

Lorsque la température des organes de freinage est supérieure à un seuil donné, une alarme est transmise au conducteur. Ce seuil peut être déterminé expérimentalement.

On va décrire un exemple de mise en oeuvre de l'invention donné à titre non limitatif, en se référant aux figures annexées suivantes :
- la figure 1 est une vue en coupe partielle d'un ensemble de deux roues jumelées, de leur moyeu et du tambour de fiein, coupe passant par l'axe des roues ;
- la figure 2 est un schéma d'installation du dispositif de surveillance des pneumatiques appliqué à un tracteur poids lourd ;
- la figure 3 est un détail de la figure 1 concernant l'installation des antennes fixe et tournante dans le cas d'un essieu équipé d'un capteur anti-blocage de roue ;
- la figure 4 présente un schéma du circuit de mesure de température ;
- la figure 5 illustre un cycle de mesures dans le cas de l'emploi d'une antenne tournante ainsi qu'éventuellement d'une antenne fixe pour mesurer la température.

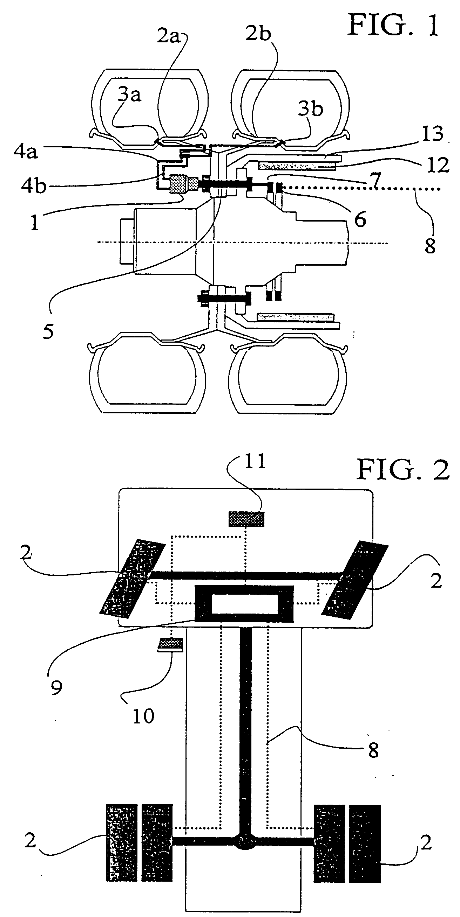

La figure 1 illustre l'installation du dispositif de surveillance de l'état des pneumatiques d'un véhicule sur une roue d'essieu arrière d'un tracteur poids lourd équipée de freins à tambour.

Un module de roue 1 est fixé à l'extrémité de l'un des goujons 5 de fixation des roues jumelées 2a et 2b. Le module de roue 1 est relié aux valves 3a et 3b par l'intermédiaire des liaisons pneumatiques 4a et 4b. Le module de roue 1 est aussi relié à une unité centrale 9 (fig. 2) par des moyens de liaisons électriques qui comportent :
- des conducteurs électriques traversant le goujon 5 jusqu'à une antenne tournante 7,
- un élément de couplage inductif composé de l'antenne tournante 7 et d'une antenne fixe 6 ;
- une liaison électrique entre l'antenne fixe 6 et l'unité centrale 9 utilisant le faisceau électrique 8 du véhicule.

On entend par antenne "fixe", une antenne rendue solidaire du porte-moyeu 14 non tournant de l'essieu de la roue 2.

Les deux antennes sont disposées dans l'environnement des organes de freinage comprenant le tambour de frein 12 monté à l'intérieur de la cloche 13.

La figure 2 présente un schéma général d'installation du dispositif de surveillance sur un tracteur poids lourd. Chaque roue 2 du tracteur est équipée comme on vient de le décrire, le dispositif comporte en plus :
- l'unité centrale 9 ; dans le cas des remorques, cette unité centrale est alimentée en énergie par le véhicule tracteur par l'intermédiaire de la prise normalisée 10 reliant le faisceau électrique de la remorque à celui du tracteur ;
- un moyen d'alarme 11 du conducteur relié à ladite unité centrale 9.

Le module de roue 1 comprend un capteur de mesure de la pression de gonflage et, de préférence, un capteur de mesure de la température de l'air des pneumatiques. Ces capteurs ont deux voies de mesure lorsqu'ils équipent un ensemble de deux roues jumelées. Le module comporte aussi l'électronique nécessaire pour stocker l'énergie électrique nécessaire à son excitation transmise par l'unité centrale 9, coder et transmettre les mesures à l'unité centrale 9. Un tel module est décrit dans les demandes WO87/00127, WO87/00129 et WO89/05737.

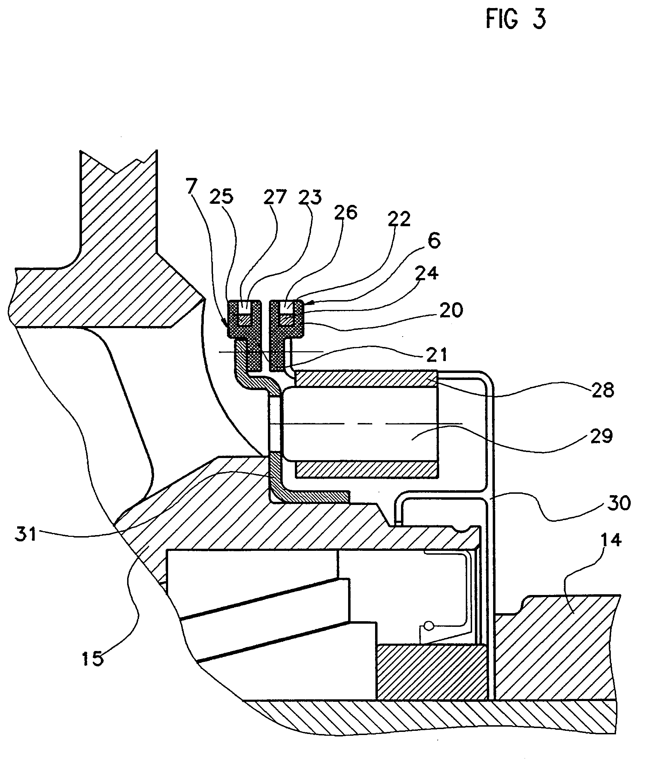

La figure 3 présente un exemple d'installation des deux antennes fixe 6 et tournante 7 dans l'environnement des organes de freinage d'un essieu équipé d'un capteur anti-blocage de roue.

Les deux antennes comportent un support 20, 21 de section droite en forme de "µ" dont l'axe de révolution est confondu avec celui de l'essieu, une cavité 22, 23 entre les barres supérieures du "µ" ; dans la cavité 22, 23 est enroulé un bobinage 24, 25 de fil conducteur puis une résine de protection 26, 27.

Le support 20 de l'antenne fixe 6 est fixé à un support 28 d'un capteur anti-blocage de roue 29, le support 28 étant lui-même solidaire d'un récupérateur d'huile 30 rattaché au porte-moyeu fixe 14. Le support 21 de l'antenne tournante 7 est fixé à une couronne de comptage 31 du système anti-blocage de roues, la couronne de comptage 31 étant elle-même rendue solidaire du moyeu 15 tournant.

L'invention peut être mise en oeuvre en utilisant pour estimer la température des organes de freinage, soit l'antenne fixe 6, soit l'antenne tournante 7, soit les deux.

Le bobinage de l'antenne fixe peut être réalisé avec un fil de cuivre de diamètre 16/10 de mm. Pour une longueur de fil de 58 m, la résistance de l'antenne est de 50 Ω à 20°C et de 104 Ω à 300°C, compte tenu de la résistivité du cuivre égale à 1,724 µohm.cm, et du coefficient de température β de 0,00393. Dans une plage de température de -40 à 300°C, la variation de résistance du bobinage de l'antenne fixe sera donc de l'ordre de 66 Ω.

Ces valeurs de résistance électrique sont compatibles avec les valeurs d'inductance nécessaires pour un bon couplage électromagnétique entre les antennes.

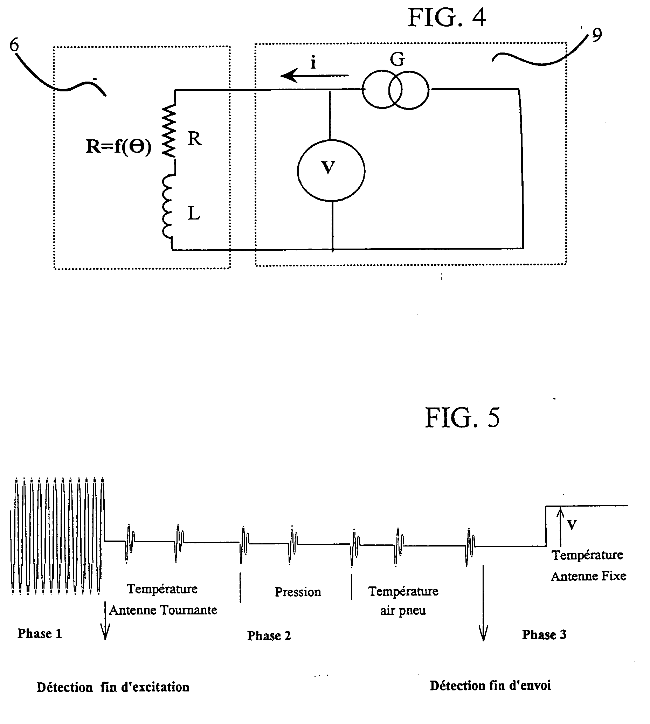

Le schéma de la figure 4 illustre le circuit de mesure de la résistance électrique du bobinage de l'antenne fixe 6.

L'antenne est représentée par une résistance R en série avec un inductance L. L'unité centrale 9 comprend un générateur de courant continu G et un voltmètre de mesure V. Le circuit de mesure comprend, en série, le bobinage de l'antenne (R et L) et le générateur de courant G, et il comprend le voltmètre V connecté en parallèle aux deux extrémités du bobinage 24 de l'antenne fixe 6.

Un courant continu I est injecté par le générateur de courant G dans le circuit. Puis le voltmètre V mesure la différence de potentiel U entre les deux bornes du bobinage 24 de fil conducteur de l'antenne. Le rapport U/I donne la valeur de la résistance du bobinage R. A partir d'une abaque d'étalonnage, on peut alors obtenir la température de l'antenne. L'estimation de la température des organes de freinage peut alors être faite par référence à une seconde abaque d'étalonnage.

Pour éviter un auto-échauffement du bobinage 24 de l'antenne 6, il est préférable de limiter à des valeurs faibles l'intensité du courant I. Une valeur de l'ordre de 10 mA semble un bon compromis. De plus, dans le même but, les mesures peuvent être faites de façon cyclique entre deux phases de transfert de signaux entre les modules de roues 1 et l'unité centrale 9.

Dans l'exploitation de ces mesures de température des organes de freinage, il est avantageux de prévoir la transmission d'une alarme au conducteur lorsque cette température dépasse un seuil donné déterminé expérimentalement.

L'antenne tournante 7 peut aussi être utilisée seule, ou en complément de l'antenne fixe 6, pour estimer la température des organes de freinage.

Dans ce cas, la mesure de la résistance électrique du bobinage 25 de l'antenne tournante 7 est effectuée de la même manière que pour l'antenne fixe 6. L'énergie électrique utilisée est celle transmise par l'unité centrale 9 par couplage inductif selon l'enseignement de la demande WO87/00129. Le module de roue 1 doit alors comprendre les moyens nécessaires pour mesurer la température du bobinage 25, coder cette mesure et la transmettre à l'unité centrale selon, par exemple, la séquence présentée à la figure 6.

Cette figure 6 présente un cycle de dialogue entre l'unité centrale 9 et un module de roue 1.

Ce cycle se décompose ainsi :
- phase 1 : transmission d'énergie de l'unité centrale 9 vers le module de roue 1 ;
- détection de la fin de la transmission d'énergie;
- phase 2 : envoi des impulsions de mesure :
   envoi des mesures codées de la température de l'antenne tournante ;
   envoi des mesures codées de pression de gonflage ;
   envoi des mesures codées de température ;
- détection de la fin de l'envoi des impulsions de mesure ;
- phase 3 : repos du module de roue 1.

Pendant cette dernière phase de repos du module de roue 1, peut intervenir la mesure de la température de l'antenne fixe 6.

La description précédente a concerné un véhicule équipé de freins à tambour, mais l'invention peut aussi être mis en oeuvre dans le cas d'essieux équipés de freins à disques ou d'antennes situées à tout endroit de l'environnement des organes de freinage.

## Revendications

1. Dispositif de surveillance de l'état des pneumatiques d'un véhicule et de leur environnement comprenant une unité centrale (9) et pour chaque roue (2) un module de roue (1) avec au moins un capteur de mesure, ledit module (1) étant relié par des premiers moyens de liaison électrique à une antenne tournante (7) solidaire du moyeu (15) de la roue (2), ainsi qu'une antenne fixe (6) solidaire du porte-moyeu (14) de ladite roue (2) et couplée à ladite antenne tournante (7), ladite antenne fixe (6) étant reliée par des seconds moyens de liaison électrique à ladite unité centrale (9), ladite unité centrale (9) transmettant au conducteur les résultats des mesures et/ou une alarme si un état anormal des pneumatiques est détecté et lesdites antennes étant disposées dans l'environnement des organes de freinage (12, 13) de ladite roue, ledit dispositif étant caractérisé en ce qu'il comprend des moyens pour estimer la température desdits organes de freinage (12, 13), lesdits moyens incluant l'une au moins desdites antennes (6, 7) sensible aux variations de température.

2. Dispositif de surveillance de l'état des pneumatiques d'un véhicule selon la revendication 1 caractérisé en ce que l'une au moins des antennes (6, 7) comporte un bobinage (24, 25) de fil conducteur dont la résistance électrique varie avec la température.

3. Procédé de mise en oeuvre d'un dispositif de surveillance de l'état des pneumatiques d'un véhicule et de leur environnement selon la revendications 2, dans lequel, pour réaliser la mesure de ladite résistance électrique dudit bobinage (24, 25) :
- on fait passer un courant électrique continu dans ledit bobinage ;
- on mesure la différence de potentiel entre les deux extrémités dudit bobinage ;
- on calcule la résistance électrique dudit bobinage ;
- on en déduit la température moyenne dudit bobinage par référence à une abaque d'étalonnage ;
- on estime la température des organes de freinage par référence à une seconde abaque d'étalonnage.

4. Procédé selon la revendication 3, dans lequel la mesure de température est faite cycliquement entre deux phases de transfert par couplage inductif.

5. Procédé selon l'une des revendications 2 et 3, dans lequel une alarme est transmise au conducteur lorsque la température des organes de frein est supérieure à un seuil donné.

## Claims

1. A device for monitoring the condition of the tyres of a vehicle and of their environment comprising a central unit (9) and for each wheel (2) a wheel module (1) with at least one measurement sensor, said module (1) being connected by first electrical connection means to a rotating antenna (7) firmly attached to the hub (15) of the wheel (2), and also a stationary antenna (6) firmly attached to the hub housing (14) of said wheel (2) and connected to said rotating antenna (7), said stationary antenna (6) being connected by second electrical connection means to said central unit (9), said central unit transmitting to the driver the results of the measurements and/or an alarm if an abnormal condition of the tyres is detected add said antennae being situated in the environment of the braking mechanisms (12, 13) of said wheel, said device being characterised in that it comprises the means for estimating the temperature of said braking mechanisms (12, 13), said means including at least one of said antennae (6, 7) sensitive to variations of temperature.

2. A device for monitoring the condition of the tyres of a vehicle according to claim 1, characterised in that at least one of the antennae (6, 7) includes a coil (24, 25) of conductor wire the electrical resistance of which varies with the temperature.

3. A process of implementing a device for monitoring the condition of the tyres of a vehicle and of their environment according to claim 2, in which, to take the measurement of said electrical resistance of said coil (24, 25):
- a continuous electrical current is passed into said coil;
- the potential difference between the two ends of said coil is measured;
- the electrical resistance of said coil is calculated;
- the average temperature of said coil is deduced therefrom by referring to a calibration chart;
- the temperature of the braking mechanisms is estimated by referring to a second calibration chart.

4. A process according to claim 3, in which the measurement of temperature is effected cyclically between two phases of transfer by inductive coupling.

5. A process according to one of claims 2 and 3, in which an alarm is transmitted to the driver when the temperature of the braking mechanisms is higher than a given threshold.

## Patentansprüche

1. Vorrichtung zur Überwachung des Zustandes der Reifen eines Fahrzeugs und ihrer Umgebung, mit einer Zentraleinheit (9) und für jedes Rad (2) mit einem Radmodul (1) mit mindestens einem Meßfühler, wobei das genannte Modul (1) durch erste elektrische Verbindungsmittel mit einer rotierenden Antenne (7) verbunden ist, die fest mit der Nabe (15) des Rades (2) verbunden ist, sowie mit einer festen Antenne (6), die fest mit dem Nabenträger (15) des genannten Rades (2) verbunden ist und mit der genannten rotierenden Antenne (7) gekoppelt ist, wobei die genannte feste Antenne (6) durch zweite elektrische Verbindungsmittel mit der genannten Zentraleinheit (9) verbunden ist, die genannte Zentraleinheit (9) an den Fahrer die Meßergebnisse und/oder einen Alarm überträgt, wenn ein anomaler Zustand der Reifen erfaßt ist, die genannten Antennen in der Umgebung von Bremsorganen (12, 13) des genannten Rades angeordnet sind, und die genannte Vorrichtung dadurch gekennzeichnet ist, daß sie Mittel zum Abschätzen der Temperatur der genannten Bremsorgane (12, 13) aufweist, und daß die genannten Mittel mindestens eine der genannten Antennen (6, 7) umfassen, die auf Temperaturänderungen anspricht.

2. Vorrichtung zur Überwachung des Zustandes von Reifen eines Fahrzeugs, nach Anspruch 1, dadurch gekennzeichnet, daß die mindestens eine der Antennen (6, 7) eine Spule (24, 25) aus leitfähigem Draht aufweist, dessen elektrischer Widerstand sich mit der Temperatur ändert.

3. Verfahren zum Betreiben einer Vorrichtung zum Überwachen des Zustands von Reifen eines Fahrzeugs und ihrer Umgebung nach Anspruch 2, worin zum Durchführen der Messung des genannten elektrischen Widerstandes der genannten Spule (24, 25):
- man einen elektrischen Gleichstrom in der genannten Spule fließen läßt;
- man die Potentialdifferenz zwischen den beiden Enden der genannten Spule mißt;
- man den elektrischen Widerstand der genannten Spule errechnet;
- man daraus die mittlere Temperatur der genannten Spule unter Bezugnahme auf ein Vergleichsdiagramm ableitet; und
- man die Temperatur der Bremsorgane unter Bezugnahme auf ein zweites Vergleichsdiagramm abschätzt.

4. Verfahren nach Anspruch 3,
die Temperaturmessung zyklisch zwischen zwei Phasen der Übertragung durch induktive Koppelung durchgeführt wird.

5. Verfahren nach einem der Ansprüche 2 und 3, worin dem Fahrer ein Alarm übermittelt wird, wenn die Temperatur der Bremsorgane höher ist als ein vorgegebener Schwellenwert.
